## Europäisches Patentamt
## European Patent Office
## Office européen des brevets

(19)

(11) Numéro de publication: **0 017 548**
**B1**

(12)

# FASCICULE DE BREVET EUROPEEN

(45) Date de publication du fascicule du brevet: **06.07.83**

(51) Int. Cl.³: **C 04 B 29/04, E 02 D 3/00, E 04 C 5/00, B 28 B 1/52, B 28 B 23/02**

(21) Numéro de dépôt: **80400379.6**

(22) Date de dépôt: **21.03.80**

(54) Matériau de construction, son application pour remblai, revêtement, ou massif de fondation sur un sol meuble; procédé et installation de fabrication de ce matériau.

(30) Priorité: **23.03.79 FR 7907432**
**23.03.79 CH 2731/79**

(43) Date de publication de la demande:
**15.10.80 Bulletin 80/21**

(45) Mention de la délivrance du brevet:
**06.07.83 Bulletin 83/27**

(84) Etats contractants désignés:
**AT BE CH DE FR GB IT NL SE**

(56) Documents cités:
**AU - B - 421 448**
**BE - A - 699 511**
**DE - A - 1 633 613**
**DE - C - 29 488**
**FR - A - 2 228 042**
**GB - A - 953 651**
**GB - A - 1 415 524**
**US - A - 2 731 066**

(73) Titulaire: **Etat Français Représenté par le Ministère de l'Environnement et du Cadre de Vie Laboratoire Central Des Ponts et Chaussees**
**58, Boulevard Lefebvre**
**F-75732 Paris Cédex 15 (FR)**

(72) Inventeur: **Leflaive, Etienne Marie**
**17, rue Michel Voisin**
**F-92330 Sceaux (FR)**
Inventeur: **Guignard, Claude Henri**
**F-01630 Sergy (FR)**

(74) Mandataire: **Thevenet, Jean-Bruno et al,**
**Cabinet BEAU DE LOMENIE 55 rue d'Amsterdam**
**F-75008 Paris (FR)**

Courier Press, Leamington Spa, England.

# Matériau de construction, son application pour remblai, revêtement, ou massif de fondation sur un sol meuble; procédé et installation de fabrication de ce matériau.

La présente invention concerne un matériau de construction comprenant un ensemble de particules solides de forme ramassée tel que sable, gravier, cailloux, blocs rocheux, etc. . . . .

L'invention concerne aussi l'application de ce matériau pour la construction de remblai, de revêtements routiers ou de sols, ou de massifs de fondation sur un sol meuble.

L'invention concerne également un procédé et une installation de fabrication de ce matériau.

Des matériaux connus, utilisés notamment dans la construction et le génie civil, sont constitués de particules de différentes dimensions adhérant entre elles par l'intermédiare d'un liant: mortier de ciment, bitume, résine, etc. Le béton de ciment, le béton bitumeux sont des exemples de cette famille. Les particules constituant cette famille de matériaux peuvent être de toute nature.

On agit sur les propriétés de ces matériaux soit en sélectionnant les particules, soit en modifiant la quantité et/ou la qualité du liant. On constate expérimentalement que l'on n'obtient des résistances élevées dans cette famille de matériaux qu'en utilisant une répartition granulométrique des particules constitutives telles que la densité apparente du matériau obtenu se rapproche suffisamment de la densité moyenne des particules elles-mêmes et en utilisant une quantité de liant telle qu'elle remplisse la plus grande partie des vides laissés par l'assemblage des particules. Ce résultat s'explique par le fait que ces deux conditions concourent à augmenter la surface de contact entre le liant et les particules et par conséquent, le nombre des liaisons existant entre ces dernières, condition nécessaire à la bonne résistance mécanique de l'ensemble.

Une première conséquence de cela est que, si l'on dispose d'un ensemble de particules dont la répartition granulométrique est telle que l'arrangement le plus compact que l'on puisse obtenir avec ces particules comporte un pourcentage de vides élevé, une quantité de liant importante est nécessaire, ce qui peut conduire soit à un coût excessif, soit à un comportement physique trop proche de celui du liant lui-même, soit à des difficultés de réalisation pratique du mélange. C'est ainsi qu'un certain nombre de matériaux non liés disponibles, soit naturels, soit provenant de l'activité humaine (notamment déchets ou sous-produits industriels) sont inaptes à un certain nombre d'emplois sous forme de matériaux liés en raison de leur répartition granulométrique inadaptée.

Une seconde conséquence est qu'un matériau de résistance élevée, du fait qu'il comporte peu de vides, aura une faible perméabilité; cette caractéristique est un inconvénient pour certaines applications.

Le faible pourcentage de vides, associé nécessairement à l'augmentation de la résistance mécanique que l'on peut obtenir avec des composants donnés, peut avoir d'autres conséquences qui sont néfastes dans certaines applications: rigidité excessive, conductibilité thermique élevée, masse volumique importance, etc.

Par ailleurs, ces matériaux connus — constitués de particules et de liant — doivent être fabriqués par mélange et malaxage des deux composants ce qui a au moins deux conséquences importantes:

— le liant doit être, au moment du mélange, dans un état physique tel que le mélange soit possible: état liquide ou pâteux, état pulvérulent, etc. Toutes les matières utilisables en principe comme liant ne peuvent pas être mise sous cet état, compte-tenu par ailleurs, des limites physiques (par exemple température) imposées par les particules qu'il s'agit de lier.

— l'état physique dans lequel doit se trouver le liant pour que le mélange soit possible peut conduire à des caractéristiques physiques et mécaniques du liant dans le matériau final éloignées des caractéristiques maximales qu'il pourrait avoir s'il était mis en oeuvre dans d'autres conditions. En effet, beaucoup de matériaux exigent, pour la mise en valeur de leurs propriétés mécaniques potentielles, des traitements thermiques ou mécaniques (écrouissage, étirage, laminage, filage, etc. . . .) qui ne peuvent être appliqués à un liant ni avant mélange parce que celui-ci ne serait plus possible, ni après parce qu'il n'est plus accessible au sein du mélange.

On connaît, par ailleurs, un procédé pour donner un meilleur comportement mécanique à une masse de sol. Ce procédé consiste à incorporer dans de la terre des éléments résistant bien aux efforts de traction, constituant des armatures, en acier galvanisé, en alliage d'aluminium ou en acier inoxydable à base de chrome. Ces armatures se présentent sous la forme de bandes de 120 mm de largeur, sous la forme de grilles, etc. . . . Grâce à ces armatures, les grains de terre sont solidarisés par le contact terre-armatures. Le matériau renforcé selon cette technique présente les qualités d'un matériau pulvérulent et une résistance directement proportionnelle à la résistance des armatures à la traction.

L'incorporation de ces éléments d'armatures dans des sols ne peut se faire que sur le lieu d'utilisation. Les couches successives de terre doivent être nivelés, les éléments d'armature doivent ensuite être convenablement disposés à la surface de chaque couche. Ce travail nécessite une manutention importante et doit être fait avec une précision assez grande si l'on désire obtenir une répartition régulière et une proportion donnée d'éléments d'armature.

En outre, les bandes métalliques sont relativement coûteuses d'autant plus qu'elles doivent être réalisées en des métaux résistant à la corrosion. Le facteur vieillissement de ces bandes entre également en considération.

Cette terre armée n'est donc pas d'un usage très répandu en raison de son prix et de la main d'oeuvre expérimentée que sa fabrication nécessite sur le chantier même, du fait qu'elle n'est pas transportable.

L'invention remédie à ces inconvénients et a notamment pour but de réaliser un matériau de bonne résistance mécanique et pouvant être constitué par un procédé de fabrication simple et peu coûteux.

Ce but est atteint, conformément à l'invention, du fait que ce matériau comprend au moins un élément linéaire continu, souple réparti tridimensionnellement de façon désordonnée dans un ensemble de particules solides non filiformes de forme ramassée, l'élément linéaire continu contribuant à l'établissement d'une certaine cohésion entre les différentes parties de l'ensemble de particules et éventuellement d'un liant laissant essentiellement ouverts les espaces créés par l'ensemble desdites particules et de l'élément linéaire continu, en évitant ainsi une rigidité excessive matériau.

Part particules solides non filiformes de forme ramassée, il faut entendre des éléments tels que sable, gravier, cailloux, blocs rocheux naturels, fragments de sols naturels, granulats artificiels, blocs de béton, déchets solides domestiques ou industriels particulaires, etc. par opposition et à l'exclusion donc d'éléments tels que fibres, fils, rubans, etc. comme par exemple décrits dans le document US—A—2 731 066.

Avantageusement, l'élément continu est réparti de façon sensiblement uniforme dans l'ensemble de particules, et celles-ci sont avantageusement mutuellement jointives.

Avantageusement, sa teneur, en poids, de particules est supérieure à celle d'élément continu, ladite teneur en poids d'élément continu étant de préférence, comprise entre quelques centièmes et quelques dix millièmes.

Avantageusement, l'élément continu est choisi parmi les éléments suivants: fil comprenant au moins un filament continu chimique, fil textile formé à partir de fibres discontinues, fil métallique, ruban métallique, bandelette, lame fibrillée.

Avantageusement, l'élément continu constitue le seul moyen de liaison entre les particules.

Alternativement, le matériau comprend en outre, un liant contribuant à solidariser l'élément continu avec les particules et les particules entre elles, tout en laissant essentiellement ouverts les espaces créés par l'ensemble desdites particules et l'élément linéaire continu.

Avantageusement, le liant est choisi parmi les produits suivants: liant hydraulique, liant hydrocarbonné, liant pouzzolanique additionné de chaux, liant chimique.

Le matériau, selon l'invention, est avantageusement fabriqué selon le procédé suivant lequel on établit un courant de fluide, on introduit dans ce courant un ensemble de particules solides de forme ramassée et au moins un élément linéaire continu souple, et on mélange de façon homogène les particules et l'élément continu en recueillant sur un support ces deux constituants que l'on sépare dudit fluide.

Avantageusement, ledit courant de fluide est un courant de liquide et on élimine ce liquide lorsque les constitutants dudit mélange sont recueillis sur le support.

Ce procédé est avantageusement mis en oeuvre dans une installation caractérisé, conformément à l'invention, en ce qu'elle comprend des moyens pour former un courant de fluide, une alimentation pour fournir ledit élément continu, des moyens pour amener cet élément dans ledit courant de fluide, des moyens pour mélanger au fur et à mesure ce fluide, ledit élément continu et une certaine proportion dudit ensemble de particules, et des moyens pour éliminer le fluide dudit mélange.

D'autres caractéristiques et avantages de l'invention ressortiront à la lecture de plusieurs exemples de réalisation données ci-dessous en référence aux dessins annexés dans lesquels:

— la figure 1 est une vue schématique en élévation d'un premier mode de réalisation d'une installation de fabrication du matériau selon l'invention;

— la figure 2 est une vue schématique en élévation d'un deuxième mode de réalisation d'une installation de fabrication du matériau selon l'invention;

— la figure 3 est une vue partielle schématique en élévation d'un troisième mode de réalisation d'une installation de fabrication selon l'invention;

— la figure 4 est une vue partielle schématique en élévation qu'un quatrième mode de réalisation d'une installation de fabrication selon l'invention;

— la figure 5 est une vue partielle schématique en élévation d'un cinquième mode de réalisation d'une installation de fabrication selon l'invention;

— la figure 6 est une vue partielle schématique d'un sixième mode de réalisation d'une installation de fabrication selon l'invention.

Ainsi, le matériau selon l'invention est constitué d'un mélange désordonné de particules non filiformes de forme ramassée et de fils, filaments, bandes continues, souples et/ou de leurs combinaisons.

Les particules, de préférence rigides, constituent avantageusement, la plus grande partie du matériau en pourcentage pondéral. Des particules de nature ou d'origine différentes peuvent être associées dans un même matériau. On peu citer comme particules pouvant être utilisées:

— les particules minérales naturelles telles que sable, gravier, cailloux, blocs rocheux naturels, sols fins, etc. . . .;

— les particules minérales naturelles traitées (par concassage, par traitements de surface, etc. . . .) et/ou sélectionnées par criblage, tamisage, sédimentation ou tout procédé de sélection formant un mélange de composition granulométrique contrôlée et dont les propriétés des particules (forme, caractéristiques de surface, etc. . . .) ont été améliorées;

— les particules minérales reconstituées: blocs de béton, granulats artificiels constitués de sable et de fines agglomérés par un liant, granulats artificiels minéraux de toute nature tels qu'argile expansée, schist expansé, etc. . . ., particules provenant du concassage, par un processus quelconque, d'un béton ou de tout autre matériau lié, tel que grave ou sable-ciment, grave ou sable-bitume, grave ou sable-laitier, etc. . . .;

— les particules minérales ou non, d'origine industrielle.

La granulométrie de l'ensemble des particules constituant le matériau peut être extrêmement diverse, aussi bien en dimensions extrêmes ou moyennes des particules qu'en distribution granulométrique, selon l'objectif poursuivi et/ou les conditions de fabrication.

Les fils, filaments, laminettes (ou bandelettes), ou lames fibrillées constituant le deuxième composant fondamental du matériau, objet de l'invention, sont des éléments continus. Il doit être donné au terme de "continu", dans le cadre de l'invention, le sens qui lui est ordinairement donné dans l'industrie textile, c'est-à-dire qu'il s'agit d'éléments de grande longueur par rapport à des fibres d'origine naturelle (dont la longueur est en général de l'ordre de quelques centimètres) ou par rapport à des fibres chimiques coupées telles qu'elles sont utilisées dans l'industrie.

Les fils, filaments, bandes, bandelettes, continus dont il s'agit peuvent être fabriqués sur place immédiatement avant leur mélange avec les particules, ou fabriqués industriellement et réutilisées au moment du mélange sous un conditionnement approprié (bobine, écheveau, etc. . . .).

La nature des fils, filaments, bandes, bandelettes utilisés dans le matériau devra être telle que leurs caractéristiques mécaniques soient suffisantes pour un bon comportement mécanique du matériau final.

Dans le cas de fils, la nature des fibres ou filaments entrant dans leur composition peut être très diverse: fibres naturelles végétales ou animales, fibres ou filament chimique et/ou métallique.

Les filaments, bandelettes ou lames fibrillées peuvent être de nature chimique et/ou métallique.

Dans ce qui suit les fils, filaments, bandes, bandelettes et lames fibrillées continus et leurs combinaisons seront désignés par les termes d'éléments continus.

Le pourcentage pondéral d'éléments continus dans le matériau prend, avantageusement, des valeurs allant de quelques pourcents à une valeur très faible par exemple de quelques pour dix-mille.

On pourra utiliser différents paramètres pour décrire le matériau, et notamment les suivants:

— paramètres décrivant l'ensemble de particules (nature, propriétés mécaniques, dimensions, forme, répartition granulométrique, paramètres décrivant l'arrangement géométrique, etc. . . .);

— paramètres décrivant les éléments continus (nature, dimensions transversales, caractéristiques mécaniques, etc. . . .);

— paramètres décrivant les relations dans le matériau entre l'ensemble de particules et le réseau — ou ensemble — d'éléments continus, et parmi ceux-ci notamment:

. les pourcentages, pondéral et volumique, des éléments continus par rapport au particules,

. la longueur moyenne L d'éléments continus par unité de volume du matériau,

. la dimension M de la maille cubique moyenne théorique qui correspondrait à un réseau cubique tridimensionnel de même valeur L,

. la répartition géométrique des éléments continus au sein du matériau,

— paramètres décrivant le comportement global du matériau en fonction des emplois auxquels il est appelé.

Selon un autre mode de réalisation le matériau, objet de l'invention, comporte, en plus de particules et des éléments continus, un liant ou additif complémentaire. Ce liant peut être, soit un liant hydraulique (ciment, chaux, etc. . . .), soit un liant hydrocarbonné (bitume, goudron, etc. . . .), soit un liant pouzzolanique additionné de chaux (comme liant pouzzolanique, on peut utiliser des pouzzolanes naturels ou des cendres volantes de centrales thermiques), soit un liant chimique (résine).

Le matériau résultant de l'invention est constitué par l'imbrication d'un ensemble de particules et d'un réseau tridimensionnel d'éléments continus.

La répartition des éléments continus au sein de l'ensemble de particules est désordonnée; les éléments continus sont disposés de façon aléatoire dans l'espace, leur disposition dépendant des conditions de fabrication et de mise en oeuvre.

Le rôle principal des éléments continus par rapport à l'ensemble de particules est double:

1. Contribuer à la résistance mécanique de l'ensemble. L'interaction mécanique du réseau d'éléments continus et de l'ensemble de particules est complexe. Les éléments continus sont mis en tension, lors des déformations de l'ensemble de particules, par différents mécanismes, parmi lesquels: le frottement entre les éléments continus et les particules, la mise en tension des boucles formées par les éléments continus au sein de l'ensemble de particules, les entrecroisements des éléments continus entre eux, qui limitent les possibilités de déplacement des éléments continus au sein de l'ensemble de particules. La résistance à la traction des éléments continus s'oppose alors aux déformations du matériau. La grande longueur des éléments continus joue un rôle important dans l'apparition de ces mécanismes et par conséquent, dans la résistance globale de l'ensemble, à laquelle participe une masse d'autant plus grande de matériau que les éléments continus de grande longueur transmettent les efforts à des distances importantes de la zone sollicitée initialement.

2. Améliorer la résistance à l'érosion externe ou interne de l'ensemble de particules, par suite de l'imbrication des particules au sein du réseau d'éléments continus, notamment par rapport à l'érosion due au ruissellement et à l'infiltration d'eau. La résistance à l'érosion sera d'autant meilleure que le rapport de M à la dimension moyenne des particules sera faible.

Le matériau résultant de l'invention présente un certain nombre de qualités fondamentales qui constituent pour beaucoup d'applications des avantages importants par rapport aux matériaux disponibles actuellement.

1. La matière constituant les éléments continus (fils, filaments, bandes, bandelettes et leurs combinaisons) est utilisée sous une forme beaucoup plus efficace, à quantité égale, qu'un liant utilisé en masse, pour résister aux efforts de traction qui se manifestent au sein d'un ensemble de particules soumis à des sollicitations. Les éléments continus peuvent en effet, être produits dans un processus industriel adapté à la mise en valeur des qualités mécaniques potentielles de la matière qui les constitue; ils peuvent en particulier être soumis à un étirage contrôlé et approprié à l'obtention de caractéristiques mécaniques optimales, en traction notamment.

2. L'emploi de la matière constituant les éléments continus sous forme de fils, filaments, bandes, bandelettes, lames fibrillées et/ou leurs combinaisons permet une transmission efficace des efforts au sein du matériau tout en n'occupant qu'une fraction très faible des vides de l'ensemble granulaire. Ceci apporte plusieurs avantages importants:

a) on peut utiliser un pourcentage pondéral ou volumique de la matière constituant les éléments continus par rapport à l'ensemble du matériau considérablement plus faible que dans le cas d'un liant utilisé en masse, pour obtenir un résultat mécanique équivalent;

b) il est possible d'obtenir un matériau de qualité à partir d'une ensemble de particules de granulométrie creuse ou discontinue, — c'est-à-dire de granulométrie admettant un fort pourcentage de vides —, alors qu'un tel résultat est très difficile à obtenir avec un liant en masse sans utiliser de correction granulométrique. Cet avantage est particulièrement important pour la mise en valeur des matériaux disponibles de granulométrie inadaptée aux traitements par un liant en masse;

c) les vides de l'ensemble de particules n'étant pas occupés par un mortier ou liant, il est possible d'obtenir un matériau ayant à la fois une perméabilité élevée, une bonne résistance mécanique et une bonne résistance à l'érosion; ce résultat est particulièrement intéressant pour de nombreuses applications dans lesquelles la conductivité hydraulique du matériau est un facteur important;

d) les vides de l'ensemble de particules n'étant pas occupés par un mortier, il est possible d'obtenir un matériau ayant à la fois une conductibilité thermique faible et une bonne résistance mécanique;

e) pour la même raison, il est possible d'obtenir un matériau ayant une faible densité et une bonne résistance mécanique.

3. Sur le plan mécanique, il est possible de réaliser des matériaux à la fois résistants et de déformabilité contrôlable par un choix judicieux de la matière des éléments continus, du pourcentage utilisé et de la répartition géométrique des éléments continus dans la masse. Or il est important, dans la conception des ouvrages, de pouvoir faire appel à des matériaux de déformabilité voulue, ni trop faible, ni trop élevée, pour résoudre des difficultés de répartition de contraintes entre les différents éléments d'un ouvrage ou entre le sol et l'ouvrage. Les matériaux liés par des liants en masse sont souvent, soit de rigidité excessive, soit sujets au fluage.

4. Les efforts au sein du matériau selon l'invention se répartissent et se transmettent de deux façons complémentaires et plus ou moins indépendantes selon l'échelle à laquelle on se place dans le matériau; d'une part, de particule à particule au sein de l'ensemble de particules, d'autre part, par le réseau d'éléments continus. Le caractère complémentaire de ces deux modes de transmission permet une compensation des hétérogénéités locales et par conséquent, une meilleure homogénéité mécanique globale; notamment une faiblesse localisée (compressibilité, fragilité, etc. . . .) d'une ou de quelques particules ne constituera pas un défaut initiateur d'un processus de rupture.

On donne, ci-dessous, à titre d'exemple, les conditions dans lesquelles un matériau a été réalisé:

— particules: sable de granulométrie 0,2 à 2 mm;

— élément continu: fil sans torsion de tex formé de 46 filaments de polyester;

— pourcentage pondéral de fil par rapport au sable: 0,14 pour cent;

— $L = 0,125$ m/cm$^3$;

— $M = 4,9$ mm.

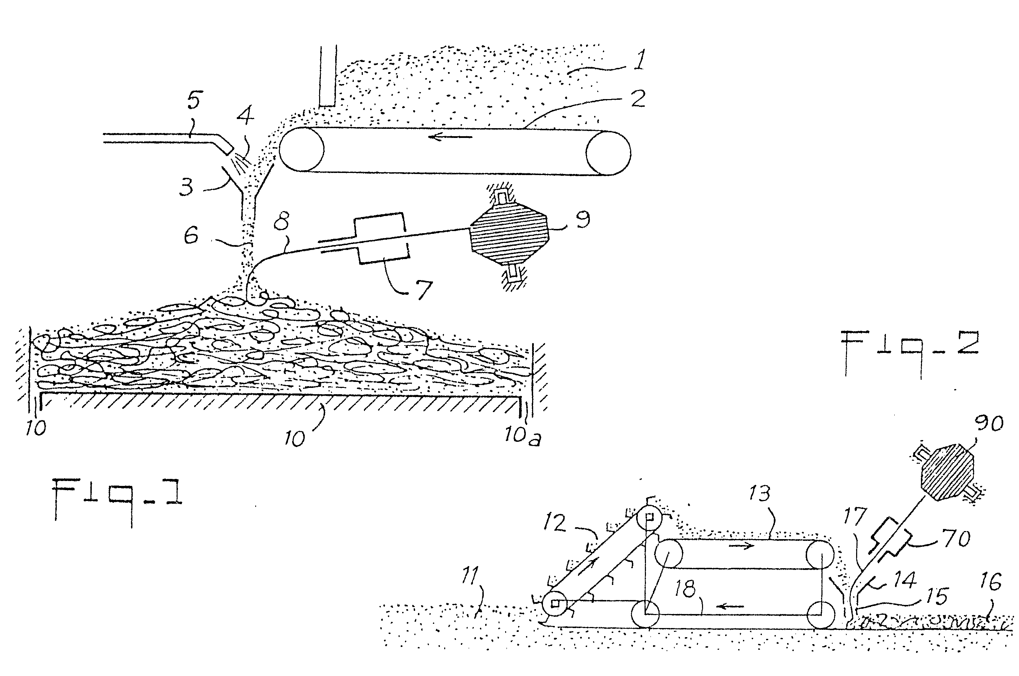

L'incorporation du fil dans le sable a été réalisée la façon suivante (voir figure 1):

— le sable 1 est amené avec un débit contrôlé par un tapis sans fin 2;

— le sable 1 tombe dans une trémie 3 où il est entraîné par de l'eau émise sous forme de jet 4 par une buse ou lance 5;

— sous la trémie 3, s'établit un écoulement constant d'eau et de sable 6 de forme et de vitesse contrôlées;

— un pistolet pneumatique 7 projette, en direction de l'écoulement 6, un fil 8, qui provient d'une bobine 9;

— le dosage fil/sable est ainsi contrôlé par la maîtrise du débit de sable et de la vitesse de projection du fil 8;

— l'ensemble sable + fil + eau se dépose sur un support 10, en nappes, qui se recouvrent successivement au fur et à mesure de l'écoulement, pendant que l'eau est draînée naturellement par gravité, par exemple, vers des orifices d'évacuation 10a du support 10.

Le matériau ainsi réalisé a une densité sèche de 1,5 g/cm³ environ. Placé dans un conteneur de faible rigidité (PVC) et soumis à cette densité à un essai de poinçonnement utilisant un poinçon circulaire de 50 mm de diamètre, la force nécessaire à un enfoncement des poinçons de 5 mm est approximativement de 1 tonne, ce qui correspond à environ 50 kg/cm², pression sans commune mesure avec la pression de poinçonnement du même sable ne contenant pas de fil et placé à la même densité.

Le matériau selon l'invention trouve notamment application dans les domaines de la construction et du génie civil (y compris bâtiment, génie rural, etc. . . .).

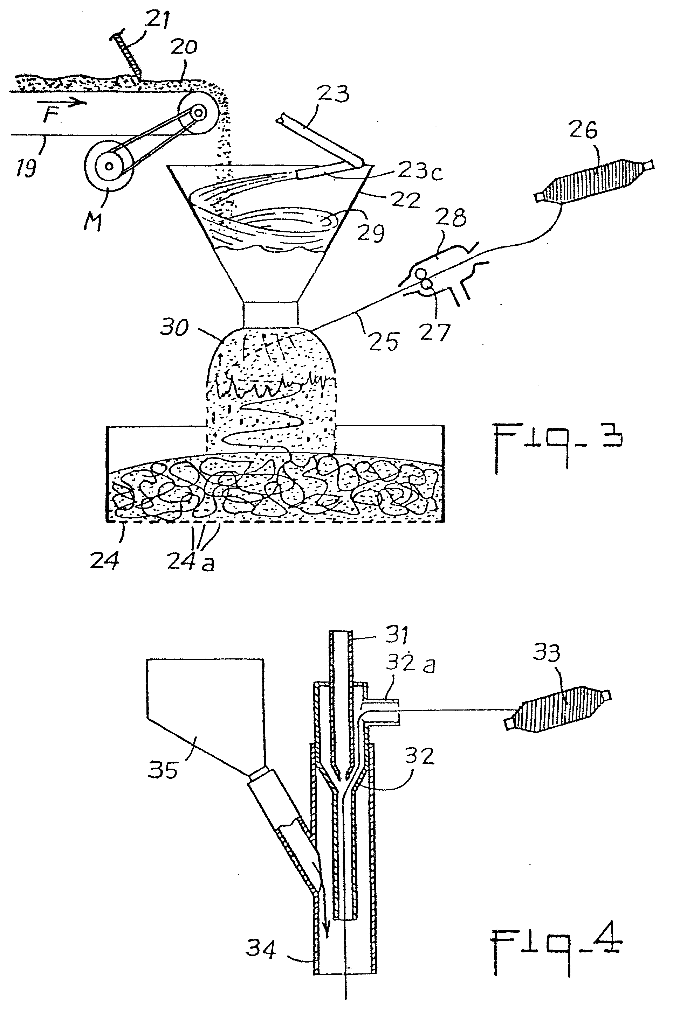

On peut, à titre d'exemple, envisager, pour le matériau selon l'invention, l'application donnée ci-dessous, qui n'est citée que comme illustration sans être aucunement restrictive des applications possibles. Cette application est représentée à la figure 2, et elle consiste dans la réalisation économique d'une route sur terrain sableux inapte, à l'état naturel, à recevoir des véhicules. On opère sur un terrain naturel constitué de sable propre de granulométrie: 0,2 à 1 mm, à l'état sec.

Une couche superficielle 11 du sable du tracé est excavée par un chargeur-excavateur 12 qui alimente une bande transporteuse 13; celle-ci, placée parallèlement au tracé de la piste, a pour rôle de faire retomber le sable sur le tracé par l'intermédiaire d'un cyclone hydraulique — trémie 14. L'écoulement de sable et d'eau 15 a une forme et un débit qui permettent de redéposer le sable régulièrement sur le tracé, en une couche 15 par exemple de 15 cm d'épaisseur. Pendant la chute du sable sur le sol, des filaments 17 déroulés d'une bobine 90, sont projetés par voie pneumatique par un dispositif 70 sur le sable et s'y incorporent. Il s'agit de filaments polyester de 40 décitex, au dosage pondéral de 0,15 pour cent du poids de sable.

Compte-tenu de la largeur de la machine qui est de 2 mètres, l'opération est répétée en plusieurs passes parallèles dont le nombre est fonction de la largeur de la piste à réaliser. Une autre solution consiste à fabriquer le matériau en un endroit fixe et à le transporter et à l'épandre en place.

L'ensemble des couches 16 déposées sur le sol, est alors compacté puis revêtu d'un enduit superficiel qui sera décrit ci-dessous.

Si on l'estime souhaitable pour l'accrochage de l'enduit superficiel (ceci est fonction du type de véhicules appelés à circuler sur cette route), le processus de projection des fils 17 peut être réglé de telle sorte que la densité des fils 17 en surface de la couche 16 soit plus élevée que dans le reste de l'épaisseur de cette couche.

L'enduit superficiel est réalisé de la façon suivante:

Une émulsion de bitume de 0,5 l/m² est alors épandue, suivie du décroulement d'une nappe textile non tissée de 150 g/m², celle-ci adhère à la couche sous-adjacente par l'intermédiaire du bitume et des fils, qui la relient à la masse. Un deuxième épandage d'émulsion et un gravillonnage complètent l'enduit superficiel.

Dans l'application ci-dessus, la maille cubique théorique équivalente M a pour valeur 2,1 mm et la longueur de fil par unité de volume est $L = 0,68$ m/cm³.

Un châssis roulant commun, qui peut être automoteur, 18 supporte la bande sans fin 13, l'excavateur 12 et, le cas échéant, les éléments 14, 70 et 90.

Une autre application du matériau décrit ci-dessus consiste dans la réalisation d'un massif de fondation d'une ouvrage d'exploitation prétrolière en mer.

Un sable grossier de granulométrie de 1 à 3 mm est dragué sur un site approprié et transporté par chalands sur le lieu de réalisation de l'ouvrage. Ce sable est repris par voie hydraulique et des fils polyamides de 100 décitex sont incorporés au sable par entraînement hydraulique direct.

Ce dosage des fils en poids est de 0,2 % du poids du sable ($M = 3$ mm). L'ensemble sable + fils est déposé au fond de la mer pour constituer progressivement un massif de fondation résistant à l'érosion pendant la phase de réalisation et de caractéristiques mécaniques élevées. Une protection extérieure définitive est réalisée par dépôt, par le même procédé, d'un matériau divisé plus gros, de granulométrie de 5 à 10 mm, les fils étant des fils de 150 décitex dosés, en poids, à 0,3 % du poids du matériau divisé ($M = 3$ mm).

Autres applications possibles du matériau selon l'invention:

— couche superficielle protégeant une zone sableuse (désertique par exemple) de l'érosion éolienne.

— matériau léger et isolant constitué par le matériau résultant de l'invention dans lequel les particules sont des granulats légers (argile expansée par exemple);

— couche draînante et filtrante pour revêtement de berges ou protection côtière;

— remblai en masse ayant une pente de talus plus forte que ne le permettraient les particules utilisées sans éléments continus;

— remblai en masse résistant à l'érosion;

— matériau de revêtement résistant à l'érosion;

— sous-couche de chaussée en béton;

— sous-couche pour voie ferrée.

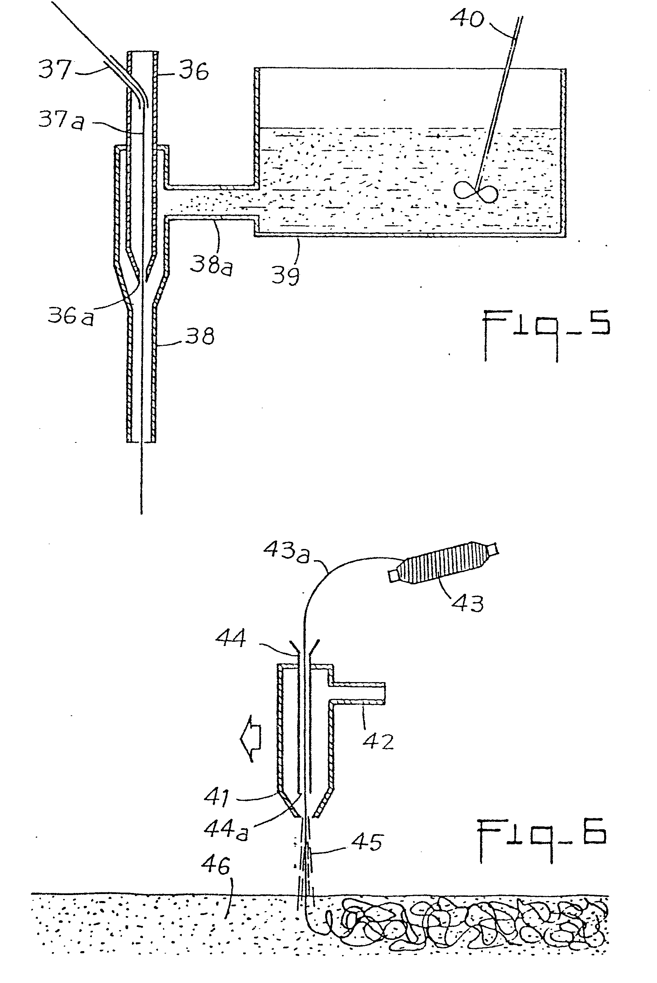

La figure 3 montre une bande transporteuse 19 pour l'alimentation en matériau granulaire 20, associée à un régulateur de débit constitué par un râcloir 21 s'étendant transversalement au-dessus de la bande 19 à une distance réglable en fonction du débit désiré. Cette bande 19 est entraînée dans le sens de la flèche F par un moteur M. L'extrémité de déchargement de la bande 19 se trouve au-dessus d'une trémie de forme cylindro-conique 22 qui est également alimentée en eau par un conduit 23 dont l'extrémité de distribution 23a est conformée en hélice de manière à communiquer un mouvement tourbillonnaire à l'eau que ce conduit distribue. La trémie 22 se trouve au-dessus d'une surface réceptrice 24 avantageusement constituée par un tamis destiné à permettre l'évacuation de l'eau des matières solides.

Un dispositif d'alimentation en un élément de renforcement filiforme, par exemple un filament ou fil de matière plastique 25 de longueur indéfinie, se trouve à la sortie de la trémie. Ce dispositif d'alimentation comporte, dans cet exemple, une bobine d'alimentation 26, une paire de rouleaux d'entraînement 9 du filament 25 et un pistolet à air comprimé 27 destiné à guider le filament vers le mélange d'eau et de sable tourbillonnant, sortant de la trémie 22.

La mise en oeuvre du procédé à l'aide de cette installation consiste à déverser une quantité dosée de matériau granulaire 20 dans la trémie 22 dans laquelle on forme simultanément un tourbillon d'eau 29 qui se mélange au matériau granulaire et l'entraîne dans son tourbillon. A la sortie de la trémie 22, l'eau et le matériau granulaire forment un écoulement tubulaire 30 qui, sous l'effet de la force tangentielle s'évase en descendant comme une sorte de rideau de boue liquide tournant turbulent. C'est dans cette partie de l'écoulement que le filament est amené par les rouleaux 27 qui fixent le débit de filament et par le pistolet 28 qui guide dans son jet d'air comprimé, le filament 25 dans le mélange de matériau granulaire et de liquide 30. Le liquide prend le filment dans son tourbillon et l'entraîne vers la surface réceptrice 6 où ce filament se mélange au matériau granulaire au fur et à mesure de son dépôt, tandis que l'eau est évacuée par gravité à travers les trous 24a de la surface réceptrice 24. Le filament 25 pourrait, comme dans le cas de la figure 2, être incorporé au courant d'eau et de sable dans la trémie 22. On peut aussi envisager l'incorporation simultanée de plusieurs filaments, soit en un même endroit, soit en des endroits différents du courant de liquide.

Le dispositif de la figure 4 utilise un double éjecteur. Ce dispositif comprend une buse 31 reliée à une source d'eau sous pression non représentée. La buse 31 débouche dans un conduit 32 relié latéralement par un conduit 32a à une source d'élément filiforme 33. Le conduit 32 se rétrécit vers le bas et s'ouvre dans un conduit plus grand 34 qui communique latéralement avec une source de sable 35; cette dernière peut être approvisionnée par des moyens semblables à ceux de la figure 1 par exemple.

La dépression créée dans le tube 32 à la sortie de la buse 31 aspire le fil de la bobine 33, qui est entraîné avec l'eau à travers le conduit 32. La dépression créée dans le tube 34 à la sortie du conduit 32 aspire le sable de la source 35. Un tel dispositif doit travailler avec un sable sec ou, à défaut, prévoir des moyens pour empêcher le colmatage du sable entre la réserve de sable 35 et le conduit 34.

La figure 5 représente une variante avec un éjecteur, qui comporte une buse 36, dans laquelle débouche un tube 37 de guidage d'un filament 37a. La buse 36 débouche dans un conduit 38 qui communique latéralement par un conduit 38a avec un bac 39 contenant un mélange d'eau et de sable brassé par un agitateur 40.

L'eau est amenée sous pression dans la buse 36 et crée une dépression à la sortie 36a de la buse, dépression qui aspire le mélange d'eau et de sable du bac 29 avec le filament de renforcement 37a pour déposer ce mélange sur un support non représenté d'où l'eau est évacuée.

Enfin, la figure 6 représente une variante dans laquelle on retrouve un éjecteur 41 relié à une source d'eau sous pression par un conduit latéral 42 et à une bobine de filament 43 par un conduit 44. Le filament 43a entraîné par la dépression créée par la circulation d'eau au niveau de la sortie 44a du conduit 44, est dirigé avec le jet d'eau 45 sortant de l'éjecteur 41 dans une couche d'une matériau granulaire 46. La pression du jet d'eau fait pénétrer le liquide dans la couche 46 sur une certaine profondeur qui est fonction de la pression et ce liquide entraîne le filament dans cette couche en le mélangeant au sable. Un déplacement relatif entre le jet d'eau et la couche de sable assure la répartition du filament.

**Revendications**

1. Matériau de construction comprenant au moins un élément linéaire continu souple (8), caractérisé en ce qu'il est constitué d'au moins un tel élément réparti tridimensionnellement de façon désordonnée dans un ensemble de particules solides non filiformes de forme ramassée (1), l'élément linéaire continu contribuant à l'établissement d'une certaine cohésion entre les différentes parties de l'ensemble de particules en enlaçant ces parties et éventuellement d'un liant laissant essentiellement ouverts les espaces créés par l'ensemble desdites particules et de l'élément linéaire continu, en évitant ainsi une rigidité excessive du matériau.

2. Matériau selon la revendication 1, caractérisé en ce que les particules de l'ensemble sont jointives entre-elles.

3. Matériau selon l'une des revendications 1 et 2, caractérisé en ce que l'élément continu est réparti de façon sensiblement uniforme dans le volume occupé par l'ensemble de particules.

4. Matériau selon l'une des revendications 1 à 3, caractérisé en ce que sa teneur, en poids, de particules est supérieure à celle d'élément continu ladite teneur en poids d'élément continu étant, de préférence, comprise entre quelques centièmes et quelques dix millièmes.

5. Matériau selon l'une des revendications précédentes, caractérisé en ce que l'élément continu est choisi parmi les éléments suivants: fil comprenant au moins un filament continu chimique, fil textile formé à partir de fibres discontinues, fil métallique, ruban métallique, bandelette, lame fibrillée.

6. Matériau selon l'une des revendications 1 à 5, caractérisé en ce que l'élément continu constitue le seul moyen de liaison entre les particules.

7. Matériau selon l'une des revendications 1 à 5, caractérisé en ce qu'il comprend en outre un liant laissant essentiellement ouverts les espaces créés par l'ensemble desdites particules et l'élément linéaire continu.

8. Matériau selon la revendication 7, caractérisé en ce que le liant est choisi parmi les produits suivants: liant hydraulique, liant hydrocarbonné, liant pouzzolanique additionné de chaux, liant chimique.

9. Matériau selon l'une des revendications 1 à 8, caractérisé en ce que les particules sont choisies parmi les types de particules suivants: sable, gravier, cailloux, blocs rocheux naturels, fragments de sols naturels, granulats artificiels, blocs de béton, déchets solides industriels ou domestiques.

10. Application du matériau selon l'une des revendications précédentes à la réalisation de remblais, revêtement ou massif de fondation sur un sol meuble, caractérisée en ce qu'on prélève une partie superficielle dudit sol meuble, on la mélange avec au moins un élément continu et on redépose ledit mélange sur le sol meuble.

11. Procédé de fabrication d'un matériau de construction comprenant un ensemble de particules solides de forme ramassée renforcé par au moins un élément linéaire continu souple, caractérisé en ce qu'on établit un courant de fluide, on introduit dans ce courant un ensemble de particules solides de forme ramassée et au moins un élément linéaire continu souple, et on mélange de façon homogène les particules et l'élément continu en recueillant sur un support ces deux constituants que l'on sépare dudit fluide.

12. Procédé selon la revendication 11, caractérisé en ce que ledit courant de fluide est un courant de liquide et en ce qu'on élimine ce liquide lorsque les constituants dudit mélange sont recueillis sur le support.

13. Installation pour la mise en oeuvre du procédé selon l'une des revendications 11 et 12, caractérisée en ce qu'elle comprend des moyens pour former un courant de fluide, une alimentation pour fournir ledit élément continu, des moyens pour amener cet élément dans ledit courant de fluide, des moyens pour mélanger au fur et à mesure ce fluide ledit élément continu et une certaine proportion dudit ensemble de particules, et des moyens pour éliminer le fluide dudit mélange.

14. Installation selon la revendication 13, caractérisée en ce qu'elle comprend une buse (31, 32, 36 ou 41) reliée à une source de fluide sous pression, cette buse débouchant dans un canal (32, 34 ou 38) qui est relié à une source de particules solides, moyennant quoi le courant de fluide sortant de la buse crée une dépression aspirant lesdites particules.

15. Installation selon la revendication 14, caractérisée en ce que le canal est muni d'une entrée latérale (32a) reliée à une source d'élément continu (33), moyennant quoi la dépression créée dans ledit canal par le courant de fluide sortant de la buse aspire l'élément continu et l'éntraîne dans ledit courant du fluide.

16. Installation selon l'une des revendications 13 et 14, caractérisée en ce que l'élément continu est guidé dans une buse (37 ou 44) débouchant elle-même dans une deuxième buse (36 ou 41) reliée à une source de fluide sous pression.

**Claims**

1. A building material, comprising at least a flexible continuous linear element (8) characterized in that it is constituted of at least one element distributed tir-dimensionally, in random manner, in a mass of solid particles of compact form (1) the continuous linear element contributing to creating a certain cohesion between the different parts of the mass of particles by entwining the said parts, and optionally of a binder keeping substantially open the spaces created by the mass of said particles, and of the continuous linear element, thereby avoiding an excessive rigidity of the material.

2. A material according to claim 1, characterized in that the particles in the mass of particles are jointed together.

3. A material according to any one of claims 1 or 2, characterized in that the continuous element is distributed in substantially even manner in the volume occupied by the mass of particles.

4. A material according to any one of claims 1 to 3, characterized in that the particle contents by weight of the material is greater than its continuous element content, the said continuous element content by weight being between a few hundredths and a few ten thousandths.

5. A material according to any one of the preceding claims, characterized in that the continuous element is selected from the following elements: a yarn comprising at least one chemical continuous strand, a textile yarn, formed from discontinuous fibers, wire, metallic tape, small band, fibrillate strip.

6. A material according to any one of claims 1 to 5, characterized in that the continuous element is the only means of binding the particles together.

7. A material according to any one of claims 1 to 5, characterized in that it further comprises a binder which keeps essentially open the spaces created by the mass of said particles and the continuous element.

8. A material according to claim 7, characterized in that the binder is selected from the following products: hydraulic binder, hydrocarbon binder, pozzolana binder added with lime, chemical binder.

9. A material according to any one of claims 1 to 8, characterized in that the particles are selected from the following types: sand, gravel; stones, pieces of natural rocks, fragments of natural soils, artificial aggregates, concrete blocks, industrial and domestic solid wastes.

10. Application of the material according to any one of the preceding claims to the production of embankments, surfacings or foundation mass over loose ground, characterized in that a superficial part of the said loose ground is taken and mixed with at least one continuous element, and the resulting mixture is laid over the loose ground.

11. A method for the production of a building material comprising a mass of solid particles, in compact form, reinforced by at least one flexible continuous linear element, characterized in that a flow of fluid is created, and a mass of solid particles of compact form is introduced in the said flow together with at least one flexible continuous linear element and the particles and continuous element are mixed homogeneously and collected on a support, the fluid being then drained off.

12. A method according to claim 11, characterized in that the said flow of fluid is a flow of liquid and said liquid is removed when the constituents of the said mixture are collected on a support.

13. An installation for carrying out the method according to claims 11 and 12, characterized in that it comprises means for creating a flow of fluid, means for supplying the said continuous element, means for bringing the said element into the flow of fluid, means for mixing progressively the said fluid, the said continuous element and a certain proportion of the said mass of particles, and means for draining the fluid from the said mixture.

14. An installation according to claim 13, characterized in that it comprises a nozzle (31, 32, 36 or 41) connected to a source of pressurized fluid, said nozzle issuing into a channel (32, 34 or 38) which is connected to a source of solid particles, thereby allowing the flow of fluid coming out of the nozzle to create a depression sucking in the said particles.

15. An installation according to claim 14, characterized in that the channel is provided with a side inlet (32a) connected to a source of continuous element (33), thereby allowing the depression created in the said channel by the flow of fluid coming out of the nozzles to suck in the continuous element and carrying it into the said flow of fluid.

16. An installation according to any one of claims 13 and 14 characterized in that the continuous element is guided in a nozzle (37 or 44) which issues into a second nozzle (36 or 41) connected to a source of pressurized fluid.

**Patentansprüche**

1. Baumaterial mit zumindest einem linearen elastischen Endloselement (8), dadurch gekennzeichnet, daß es durch zumindest ein solches Element gebildet ist, welches auf ungeordnete Weise dreidimensional in einer Masse von nichtfadenförmigen, festen Teilchen dichtgepackter Form (1) verteilt ist, wobei das lineare Endloselement zur Bildung einer gewissen Kohäsion zwischen den verschiedenen Teilen der Teilchenmasse durch Herumschlingen um diese Teile beiträgt, und gegebenenfalls durch ein Bindemittel, welches die durch die Teilchenmasse und das lineare Endloselement gebildeten Zwischenräume im wesentlichen offen läßt, wodurch eine übermäßige Festigkeit des Materials vermieden wird.

2. Material nach Anspruch 1, dadurch gekennzeichnet, daß die Teilchen der Masse aneinanderstoßen.

3. Material nach einem der Ansprüche 1 und 2, dadurch gekennzeichnet, daß das Endloselement in dem von der Teilchenmasse eingenommenen Raum im wesentlichen gleichmäßig verteilt ist.

4. Material nach einem der Ansprüche 1 bis 3, dadurch gekennzeichnet, daß sein Gewichsanteil an Teilchèn höher ist als jener an dem Endloselement, wobei der Gewichtsanteil des Endloselements vorzugsweise zwischen einigen Hunderstel und einigen Zehntausendstel liegt.

5. Material nach einem der vorhergehenden Ansprüche, dadurch gekennzeichnet, daß das Endloselement unter den folgenden Elementen ausgewählt ist: Faden mit zumindest einem chemischen endlosfilament, Textilfaden aus Einzelfasern, Metallfaden, Metallband, Folienbändchen, Spleißbändchen.

6. Material nach einem der Ansprüche 1 bis 5, dadurch gekennzeichnet, daß das Endloselement das einzige Verbindungsmittel zwischen den Teilchen darstellt.

7. Material nach einem der Ansprüche 1 bis 5, dadurch gekennzeichnet, daß es weiters ein Bindemittel umfaßt, welches die durch die Teilchenmasse und das lineare Endloselement gebildeten Zwischenräume im wesentlichen offen läßt.

17 0017548 18

8. Material nach Anspruch 7, dadurch gekennzeichnet, daß das Bindemittel unter den folgenden Produkten ausgewählt ist: hydraulisches Bindemittel, bituminöses Bindemittel, mit Kalk versetzter Puzzolanbinder, chemisches Bindemittel.

9. Material nach einem der Ansprüche 1 bis 8, dadurch gekennzeichnet, daß die Teilchen unter den folgenden Teilchenarten ausgewählt sind: Sand, Kies, Schotter, Naturfelsstücke, Naturerdbrocken, künstliche Granulate, Betonstücke, feste Industrie- oder Haushaltabfälle.

10. Anwendung des Materials nach einem der vorhergehenden Ansprüche bei der Schaffung von Auffüllmaterial, Verkleidungen oder Fundamenten auf lockerem Boden, dadurch gekennzeichnet, daß von dem lockeren Boden eine Oberflächenschicht entnommen, diese mit zumindest einem Endloselement vermischt und die Mischung wieder auf den lockeren Boden abgelagert wird.

11. Verfahren zur Herstellung eines Baumaterials mit einer Masse aus dichtgepackten, festen Teilchen, die zumindest durch ein lineares elastisches Endloselement verstärkt ist, dadurch gekennzeichnet, daß ein Fluidumstrom hergestellt wirdk in diesen Strom eine Masse aus dichtgepackten, festen Teilchen und zumindest ein lineares elastisches Endloselement eingebracht werden und die Teilchen und das Endloselement homogen vermischt werden, wobei diese beiden Bestandteile, die vom Fluidum abgetrennt werden, auf einer Unterlage gesammelt werden.

12. Verfahren nach Anspruch 11, dadurch gekennzeichnet, daß der Fluidumstrom ein Flüssigkeitsstrom ist und diese Flüssigkeit beim Sammeln der Bestandteile der Mischung auf der Unterlage entfernt wird.

13. Einrichtung zur Durchführung des Verfahrens nach einem der Ansprüche 11 und 12, dadurch gekennzeichnet, daß sie Einrichtungen zur Erzeugung eines Fluidumstroms, eine Zuführeinrichtung zur Lieferung des Endloselements, Einrichtungen zur Einführung dieses Elements in den Fluidumstrom, Einrichtungen zum kontinuierlichen Zumischen dieses Fluidums, des Endloselements und eines bestimmten Anteils der Teilchenmasse und Einrichtungen zur Entfernung des Fluidums aus der Mischung umfaßt.

14. Einrichtung nach Anspruch 13, dadurch gekennzeichnet, daß sie eine an eine Druckmittelquelle angeschlossene Düse (31, 32, 36 oder 41) umfaßt, welche Düse in einen mit einer Quelle für feste Teilchen verbundenen Kanal (32, 34 oder 38) mündet, wodurch der die Düse verlassende Fluidumstrom einen die Teilchen ansaugenden Unterdruck erzeugt.

15. Einrichtung nach Anspruch 14, dadurch gekennzeichnet, daß der Kanal mit einem an eine Quelle für das Endloselement (33) angeschlossenen seitlichen Einlaß (32a) versehen ist, wodurch der im Kanal durch den die Düse verlassenden Fluidumstrom erzeugte Unterdruck das Endloselement ansaugt und im Fluidumstrom mitzieht.

16. Einrichtung nach einem der Ansprüche 13 und 14, dadurch gekennzeichnet, daß das Endloselement in einer Düse (37 oder 44) geführt wird, die selbst in eine zweite, an eine Druckmittelquelle angeschlossene Düse (36 oder 41) mündet.

10

Fig_1

Fig_2

0017 548

Fig-3

Fig-4

Fig_5

Fig_6